# EUROPÄISCHE PATENTANMELDUNG

(11) **EP 2 293 345 A2**
(43) Veröffentlichungstag der Anmeldung: **09.03.2011**
(21) Anmeldenummer: 10008175.1
(22) Anmeldetag: 05.08.2010
(51) Int. Cl.: H01L 31/042, H02J 3/38

(54) **Pyrosicherung mit Varistoransteuerung zum Trennen eines Wechselrichters von einer Photovoltaikanlage**

(30) Priorität: 05.08.2009 DE 102009036216
(71) Anmelder: Adensis GmbH, 01129 Dresden (DE)
(72) Erfinder: Beck, Bernhard, 97332 Volkach OT Dimbach (DE)

(57) **Zusammenfassung**

Es wird ein Photovoltaikgenerator vorgeschlagen, der mit mindestens einem Strang (1) von mehreren, in Reihe geschalteter Photovoltaikmodulen (3), die jeweils eine Vielzahl von in Reihe geschalteter Photovoltaikzellen aufweisen, versehen ist. Vorzugsweise ist mindestens eines der Photovoltaikmodule (3) des mindestens einen Strangs (1) ist über einen Schalter (11) kurzschließbar. Die Aktivierung des Schalters (11) erfolgt bei Überschreitung eines vorgegebenen Spannungswertes U_{Grenz} über dem Strang (1). Erfindungsgemäß ist eine schaltbare Sicherung (13) vorgesehen, die insbesondere bei einem Versagen des Schalters (11) die elektrische Verbindung des Photovoltaikgnerators (1) zum Wechselrichter (7) trennt.

Die Anordnung ermöglicht den Betrieb von Photovoltaikanlagen (1) mit einer Betriebsspannung nahe 1000 Volt, was die Verwendung dünnerer Kabel zur Folge hat.

## Beschreibung

Die Erfindung betrifft eine Photovoltaikanlage mit mehreren, in Reihe geschalteten Photovoltaikmodulen als Photovoltaikgenerator, die über eine elektrische Verbindungsleitung an einen Wechselrichter angeschlossen sind.

Solche Photovoltaikanlagen sind sattsam bekannt. In der Regel sind diese Anlagen so aufgebaut, dass eine Vielzahl von Strängen parallel geschaltet wird. Die maximale Anzahl der Stränge richtet sich dabei nach der Leistung des Wechselrichters, an den die Stränge angeschlossen sind. Moderne Wechselrichter können bis zu einer Eingangsgleichspannung von ca. 900 Volt - 1000 Volt ausgelegt sein.

Zurzeit ist es üblich, jeden Strang der Anlage aus acht Photovoltaikmodulen aufzubauen, von denen jedes 60 Photovoltaikzellen aufweist. Insgesamt sind somit 480 Zellen in Reihe zueinander geschaltet. An jeder Zelle liegt im Leerlauffall eine Spannung von 1,5 Volt an, was zu einer Strangspannung von 720 Volt führt, was deutlich unter der von den Herstellern der Module angegebenen Maximalspannung von 1000 Volt liegt. Liegt eine höhere Spannung an, kann dies zur Zerstörung der Module und der gesamten Anlage führen. Die parallel geschalteten Stränge arbeiten dabei als der eigentliche Photovoltaikgenerator.

Im Betrieb der Anlage sinkt die Leerlaufspannung der Zellen auf eine Betriebsspannung von ca. 1 bis 1,1 Volt, so dass zwischen den Enden der herkömmlichen Stränge eine Spannung zwischen 480 Volt und 510 Volt anliegt. Im Beispiel der später folgenden Figuren wird der Übersichtlichkeit halber von 1 Volt Betriebsspannung pro Zelle ausgegangen, also 60 Volt Spannung über ein einzelnes Photovoltaikmodul mit 60 Zellen. Sollte der Netzbetreiber, an den die Photovoltaikanlage angeschlossen ist, diese aus welchen Gründen auch immer vom Netz nehmen (e.g. Kurzschluss in dem Einspeisekabel) springt die Spannung auf die genannten 720 Volt, was für die Module und die Anlage unkritisch ist.

Auf der anderen Seite wäre es wünschenswert, die Photovoltaik-Module und auch den Wechselrichter im Normalbetrieb mit einer höheren Spannung als 480 - 510 Volt, idealerweise mit der zulässigen Höchstspannung von 1000 Volt zu betreiben. Dieses ist aber nicht möglich, da dann im Leerlauffall eine Spannung von ca. 1500 Volt zur Zerstörung der Photovoltaik-Module und des Wechselrichters und der Anlage führen würde. Zu diesem Zweck wurde in einer kürzlich eingereichten Patentanmeldung der Anmelderin (DE 10 2009 016 159, deren Offenbarungsgehalt hier eingeschlossen sein soll) eine Schalteranordnung zur Überbrückung von PV-Modulen vorgeschlagen. Bei einer Schalteranordnung kann es womöglich zu Störungen kommen, die die Ausübung der vorgesehenen Funktion verhindern.

Ausgehend von dieser Überlegung liegt vorliegender Erfindung daher die Aufgabe zugrunde, eine Photovoltaikanlage der genannten Art mit einer höheren Betriebsspannung zu betreiben und sicherzustellen, dass, falls aus welchen Gründen auch immer doch eine unzulässig hohe Spannungserhöhung auftritt, diese nicht zur Zerstörung des Wechselrichters führt.

Diese Aufgabe wird erfindungsgemäß dadurch gelöst, dass zwischen dem Wechselrichter und der Photovoltaikanlage eine mittels eines Steuersignals steuerbare Sicherung geschaltet ist, die je nach Bauart bei Anliegen oder bei Fehlen des Steuersignals die Sicherung auslöst und dadurch die elektrische Verbindung zwischen der Photovoltaikanlage und dem Wechselrichter unterbricht.

Da die Auslösung der Sicherung zu einer definierten Spannung am Gleichspannungseingang des Wechselrichters erfolgt, wird die elektrische Verbindung zwischen der PV-Anlage und dem zu schützenden Wechselrichter sicher vor Erreichen der kritischen Überspannung, die seitens der PV-Anlage auftritt, getrennt. Diese Vorgehensweise ist bei allen Typen von Wechselrichtern anwendbar, sei es rein elektronisch/elektrisch aufgebaute Wechselrichter oder mechanisch mit einem Motor/Generator - Satz betriebene Wechselrichter.

Vorteilhafterweise ist die steuerbare Sicherung eine sich selbst zerstörende Sicherung, insbesondere eine Pyrosicherung. Unter Pyrosicherung wird dabei eine Sicherung verstanden, in welche ein Sprengsatz integriert ist, der bei Anliegen einer hinreichend hohen Spannung oder eines hinreichend hohen elektrischen Potentials gezündet wird und die elektrische Verbindung dauerhaft unterbricht. Es wird quasi "eine letzte Instanz" eingebaut, die einen definitiven Schutz bewirkt, ohne auf den Betrieb der PV-Anlage Rücksicht zu nehmen. Solche Sicherungen sind per se auf dem Fachgebiet der Sicherungstechnik bekannt.

Eine einfache aber effektive Ausführung zur Erzeugung des Steuersignals wird durch einen spannungsabhängigen Widerstand (Varistor) bereitgestellt. Der Varistor wird zwischen dem Signaleingang der Sicherung und der Zuführungsleitung des Photovoltaikgenerators zum Wechselrichter geschaltet. Dabei ist es unerheblich, wo im Verlauf der Zuführungsleitung der Varistor angeschlossen wird. Eine zweckmäßige, einfach aufgebaute Form des Varistors ist ein Überspannungsableiter. Beispielhafter Weise kann ein Zinkoxyd - basierter Überspannungsableiter vorgesehen sein, dessen Zinkoxyd Partikel bei definierter Spannung einen elektrischen Durchbruch erfahren. Die Überspannung wird bei anderen Fachgebieten in der Regel gegen Erde, vorliegend jedoch zu dem Steuereingang der Sicherung abgeleitet, um deren Auslösung zu provozieren.

Das Steuersignal sollte ein Gleichspannungssignal sein, welches in einem vorgebbaren Bereich zwischen 900 Volt und 1200 Volt, insbesondere ca. 1000 Volt liegt. Der Überspannungsableiter ist dann mit seiner Durchbruchspannung entsprechend an die Auslösespannung der Sicherung (entsprechend der zulässigen Höchstspannung für den Wechselrichter) anzupassen.

Weitere Vorteile und Einzelheiten der Erfindung ergeben sich aus der Beschreibung von Ausführungsbeispielen anhand der Figuren. Es zeigen:

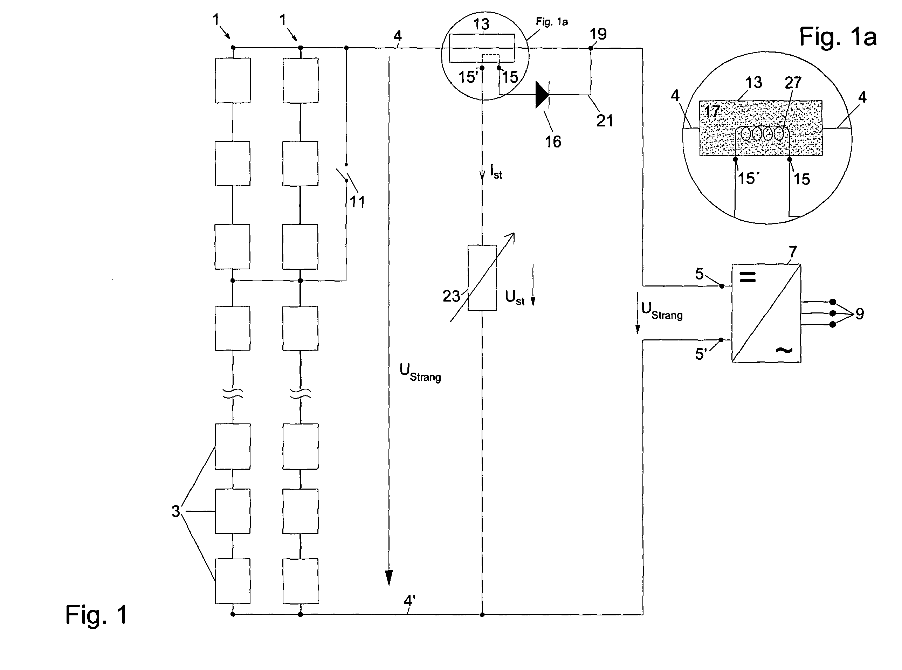

- Fig. 1: mit Detailfigur 1 a eine schematische Darstellung eines Strangs einer Photovoltaikanlage mit Kurzschlussschalter für PV-Module und mit einer steuerbaren Sicherung nach der Erfindung;
- Fig.2: eine alternative Ansteuerung mit getrenntem Steuergerät und Batterie; und
- Fig. 3: mit Detailfigur 3a eine Ausführungsform mit Direktzündung eines Treibsatzes mittels Plasmaerzeugung aufgrund der Potentialdifferenz an der Ausgangsseite eines PV-Generators.

Ein handelsüblicher Photovoltaikgenerator besteht aus einer Anzahl von parallel geschalteten Strängen 1. Jeder Strang 1 besteht aus mehreren in Reihe geschalteten Photovoltaikmodulen 3. Jedes Photovoltaikmodul 3 weist in Reihe geschaltete Photovoltaikzellen auf. Üblich für ein Photovoltaikmodul 3 ist zum Beispiel der Einsatz von 60 Zellen zu je 1,5 Volt Leerlaufspannung oder auch 130 Zellen zu jeweils ca. 0,69 Volt. In beiden Fällen ergibt sich eine im Leerlauf auftretende Spannung von ca. 90 Volt über das Modul 3, bei angenommenen acht Modulen, wie sie zur Zeit konventionell verbaut werden, also ca. 720 Volt über den Strang 3. Im Betrieb sinkt diese Spannung auf ca. 60 bis 65 Volt pro Modul 3, so dass sich eine Strangspannung U_{Strang} von 480 bis 510 Volt ergibt.

Mehrere solcher parallel geschalteten Stränge 3 sind an ihren Enden an die Eingangsklemmen 5,5' eines Wechselrichters 7 gelegt, an dessen Ausgang 9 der erzeugte Gleichstrom in einen Wechselstrom umgewandelt in ein Netz einspeist wird.

Die Leerlaufspannung von 720 Volt liegt deutlich unterhalb der zurzeit zulässigen Grenze von 1000 Volt, die die Hersteller von Photovoltaikmodulen für ihr Produkt als obere Grenze angeben. Im Betrieb wird ein entsprechend noch größerer Sicherheitsabstand zu den 1000 Volt erreicht. Bei den bekannten Anlagen dieser Art ist es wünschenswert, die zulässige Höchstspannung von 1000 Volt voll auszunutzen, um die Querschnitte der zu verlegenden Kabel klein zu halten.

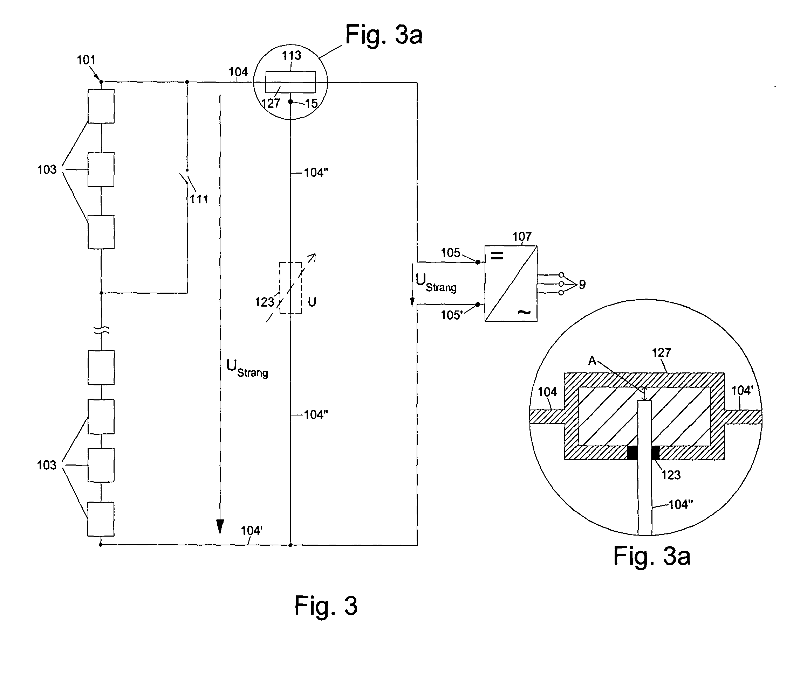

Hierzu dient bei dem Photovoltaikgenerator nach den Figuren ein Kurzschlussschalter 11 (111 bei der Figur 3). Dort ist der Strang 1 mit diesmal 16 Photovoltaikmodulen 3 vorgesehen, der zusammen mit anderen nur zum Teil gezeigten Strängen 3 parallel geschaltet ist. Die jeweiligen Strangenden sind über zwei elektrische Verbindungsleitungen 4,4' zu den Eingangsklemmen 5,5' des Wechselrichters 7 geführt. Aufgrund der 16 PV-Module 3 pro Strang 1 ergibt sich eine unzulässig hohe Leerlaufspannung von 1440 Volt (16 mal 90 Volt) über den Strang 1, aber eine zulässig hohe Betriebsspannung U_{Strang} von 960 bis 1020 Volt, die über den parallelen Strängen 1 anliegt und dem Eingang 5,5' des Wechselrichters 7 zugeführt wird. Eine Überschreitung um 20 Volt über die Zulässigkeit wird dabei als tolerabel angesehen.

Um bei einer Trennung vom Netz 9 eine Zerstörung von Wechselrichter 7 und Modul 3 zu verhindern, ist der Kurzschlussschalter 11 vorgesehen. Der Schalter 11 ist so positioniert, dass er zwischen einem Zehntel, insbesondere zwischen einem Viertel und der Hälfte der Module 3 kurzschließt. Die Ansteuerung des Schalters 11 wird von einem Grenzwertdetektor (nicht gezeigt) vorgenommen, der ermittelt, wenn die Spannung U_{Strang} über den Strang 1 den vorgebbaren Wert, hier im Beispiel 1000 Volt, übersteigt und dann den vorgesehenen Teil der Module 3 überbrückt, um die Spannung am Wechselrichtereingang 5 auf unter 1000 Volt zu begrenzen.

Bei der soweit beschriebenen Photovoltaikanlage würde ein Versagen des Schalters 11 zu einer Beschädigung, wenn nicht zu einem Totalverlust der Module 3 und des Wechselrichters 7 führen. Um einem solchen Ereignis entgegen zu treten, ist in der elektrischen Verbindungsleitung 4 zwischen einem der Pole, z.B. dem Pluspol, des letzten PV-Moduls 3 im Strang 1 und der Plus-Eingangsklemme 5 des Wechselrichters 7 eine Sicherung 13 vorgesehen, die einen Auslöseeingang oder steuerbaren Steuereingang 15 aufweist, der zu einer Zündvorrichtung, beispielweise einer sogenannten Zündpille führt. Bei Anliegen eines entsprechenden Zünd- oder Steuersignals U_{St} am Eingang wird die Sicherung 13 zum Auslösen gebracht. Der Eingang 15 ist als Potentialeingang ausgeführt, der das Potential der Verbindungsleitung Leitung 4 führt. Der Zündeingang 15 ist als zweipoliger Eingang 15,15' vorgesehen, wobei der zweite Pol 15'mit der Zuführungsleitung 4'verbunden ist, so dass das Steuersignal U_{St} als Auslösestrom I_{St} zugeführt sein wird. Damit wird quasi "eine letzte Instanz" eingebaut, die einen definitiven Schutz bewirkt, ohne auf den aktuellen Betriebszustand der PV-Anlage Rücksicht zu nehmen.

Das Steuersignal I_{St}, U_{St} kann separat über Strom und/oder Spannungswandler, Verstärkerschaltungen etc. erzeugt werden. Besonders vorteilhaft ist es jedoch, wenn es unmittelbar an der elektrischen Zuführungsleitung 4 generiert wird. Dazu ist die Zuführungsleitung 4 mit einer Verzweigung 19 versehen, die auf dem Leitungsabschnitt der elektrischen Zuführungsleitung 4 zwischen dem Kurzschlussschalter 11 und der Plus-Eingangsklemme 5 des Wechselrichters 7 liegt. Von der Verzweigung 19 führt eine elektrische Verbindung 21 zu einem von zwei Steuereingängen 15, 15', über einen internen Strompfad innerhalb der Sicherung 13 zum anderen Steuereingang 15',15 und von dort zu einem spannungsabhängigen Widerstand 23 und/oder spannungsabhängigen Halbleiter 23. Insbesondere, wenn als Sicherung 13 eine Pyrosicherung verwendet wird, bei der ein Spannungs- oder Stromimpuls zur Zündung einer Sprengladung führt, sollte der spannungsabhängige Widerstand/Halbleiter 23 eine gewisse Leistung übertragen können. Dazu eignen sich Überspannungsableiter, die im Normalbetrieb bei Nennspannung im Wesentlichen nichtleitend sind und erst bei Überschreiten einer Grenzspannung leitend werden und die anliegende Spannung weitergeben.

Im Wege der elektrischen Verbindungsleitung 21 ist noch als Option eine Diode 16 vorgesehen, um bei einem Spannungsrichtung -gebundenen Widerstand 23 einen Rückfluss an Energie zu unterbinden und im Falle des Kurzschlusses des Überspannungsableiters 23 einen Stromfreilauf für den Wechselrichter 7 zu ermöglichen.

Wenn die Sicherung 13 ausgelöst wurde, muss sie erst ersetzt werden, bevor mit dem Betreib der Photovoltaikanlage fortgefahren werden kann.

In der Detailfigur 1a ist noch eine Ausgestaltung mit einem Zündfaden 27 gezeigt, der innerhalb einer thermisch sensiblen Masse 17 angeordnet ist. Bei einem Stromstoß durch den Heizfaden erhitzt sich dieser schlagartig und bringt die Masse 17 zur Explosion, die das den PV-Generatorstrom führende Gehäuse zerfetzt und den Stromfluss sicher und rückzündungsfrei unterbindet.

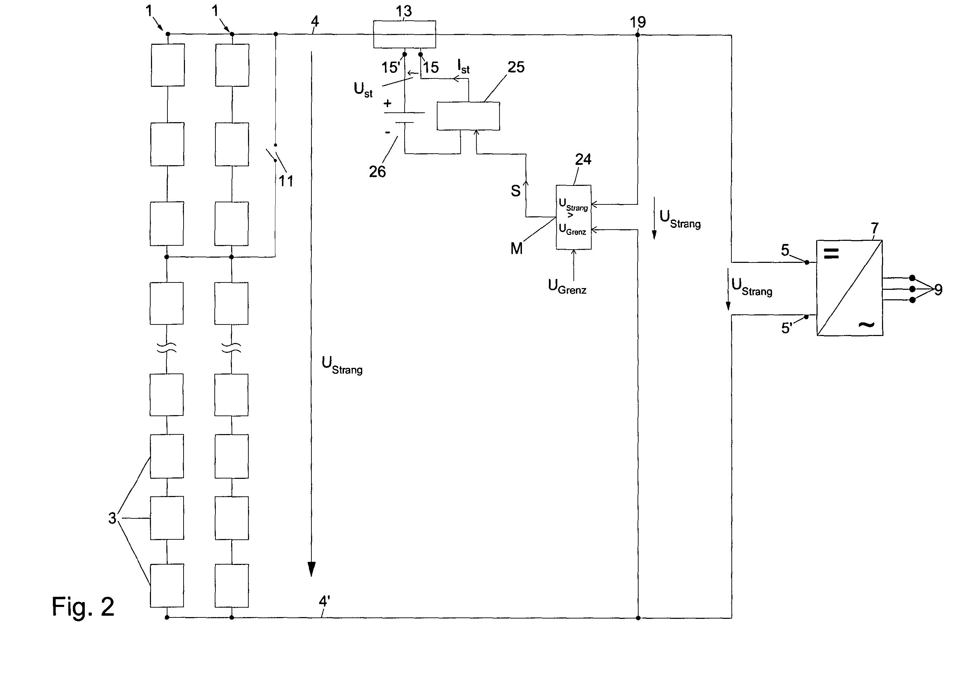

Eine weitere Ausführung ist in der Figur 2 dargestellt, bei der ein Steuersignal U_{St} über eine Steuereinheit 25 generiert wird, welche von einem Ansteuersignal S angesteuert wird. Bei Vorliegen des Ansteuersignals S wird in der Steuereinhet ein Schalter (nicht gezeigt) geschlossen. Dadurch wird eine Batterie als Spannungsquelle 26 mit dem Steuereingang 15' der Sicherung 13 verbunden. Von der Spannungsquelle 26 wird also der benötigte Strom und/oder die erforderliche Spannung U_{St}, I_{St} zum Auslösen der Sicherung 13 bereitgestellt. Für die Überspannungserkennung ist in diesem Fall eine Messund Vergleichsvorrichtung 24 mit Meldeausgang M zuständig, an dem das Ansteuersignal S anliegt, wenn eine Überschreitung der maximal zulässigen Spannung an den Eingängen 5,5' des Wechselrichters 7 ermittelt wird. Für die Ermittlung ist in der Mess- und Vergleichsvorrichtung ein oberer Grenzwert U_{Grenz} der zulässigen Strangspannung U_{Strang} hinterlegt oder kann entsprechend eingegeben werden. Dieser Grenzwert U_{Grenz} wird permanent verglichen mit der aktuell vorliegenden Strangspannung U_{Strang}. Übersteigt die Strangspannung U_{Strang} den Wert der Grenzspannung U_{Grenz} so wird an den Meldeausgang M das Ansteuersignal S an die Steuereinheit 25 abgegeben, woraufhin diese den Trennvorgang in der Sicherung 13 einleitet.

Die Figur 3 zeigt eine Ausführungsform mit Direktzündung eines Treibsatzes mittels Plasmaerzeugung aufgrund der Potentialdifferenz an einer PV-Quelle 103. Gleiche Teile sind mit um 100 erhöhten Bezugszeichen versehen, also vormals 3 mit 103, vormals 11 mit 111 usw.

Die einschneidenste Änderung ist es, dass eine Sicherung 113 nicht mehr über ein Steuer- oder Zündsignal ausgelöst wird, welches einen Brückenzünder (Zündfaden 24) ansteuert oder eine Zündpille zündet, die anschließend den Treibsatz zur Sprengung einer Zuführungsleitung 104 initiiert, sondern das Auslösen aufgrund der auftretenden Überschreitung der maximal zulässigen Spannung U _{Grenz} am Wechselrichter 107 direkt einleitet. Im Ausführungsbeispiel der Figur 3 ist eine elektrische Verbindung 104" zwischen einer Zuführungs- oder Verbindungsleitung 104' über ein als Widerstand wirkendes Dielektrikum, zum Beispiel einen Treibsatz 127, hin zur ersten Zuführungsleitung 104 vorgesehen. Die elektrische Verbindungsleitung 104" endet dabei innerhalb des Dielektrikums oder Sprengmittels in einem vorgegebenen Abstand A zur Zuführungsleitung 104. Der Abstand ist so bemessen, dass bis zum Erreichen einer Grenzspannung U_{Grenz} kein elektrischer Stromfluss zwischen der Zuführungsleitung 104 und der Verbindungsleitung 104" entsteht, da die Höhe des elektrischen Widerstands des Dielektrikums 127 einen solchen Stromfluss verhindert. Dieses ändert sich mit Erreichen oder Überschreiten der maximal zulässigen Spannung U_{Grenz} am Wechselrichter 107, die als Grenz- oder Durchbruchspannung zur Auslegung des Abstands A herangezogen ist. Es entsteht aufgrund der Potentialdifferenz zwischen den Zuführungsleitungen 104, 104'ein Kurzschluss mit Plasmabildung, der den Treibsatz 127 zündet und die Zuführungsleitung 104 unterbricht. An der Stelle der Durchtrittsöffnung der Verbindungsleitung 104" in den Treibsatz 127 hinein ist ein Isolator 129 vorgesehen, wenn in der Nähe der Durchführungsstelle elektrisch leitende Teile vorhanden sind.

Der in der Figur 3 gestrichelt eingezeichnete Überspannungsableiter 123 ist optional und dient dazu, bei der Berechnung des Abstands A eine hohe Toleranz zuzulassen. Durch die Vorschaltung des Überspannungsableiters 123 kann der definierte Abstand A sehr klein gewählt werden, z.B. so klein, dass bereits eine Potentialdifferenz von 100 Volt den Kurzschluss provozieren würde. Diese 100 Volt liegen aufgrund des hohen Widerstands des Ableiters 123 im Normalfall nicht an, sondern erst, wenn eine oberhalb der Durchschlagsspannung des Überleiters aufgetretene Spannung diesen leitend macht und das Potential, z.B. die 900 bis 1000 Volt, an die Mündung der Verbindungsleitung 104" im Treibsatz 127 anliegt. Diese hohe Spannung (im Vergleich zu der auf beispielsweise 100 Volt dimensionierten Durchschlagspannung zur Plasmabildung über den vorgegebenen Abstand A) führt zu einem sicheren Durchschlag im Material des Treibsatzes und zündet diesen.

### Bezugszeichenliste

- 1: Modulstrang
- 3: Photovoltaikmodul
- 4,4': Zuführungsleitung
- 5,5': Eingangsklemmen Wechselrichter
- 7: Wechselrichter
- 9: Versorgungsnetz
- 11: Kurzschlussschalter
- 13: Sicherung
- 15a,15b: Steuereingang Sicherung
- 16: Diode
- 17: Thermomasse
- 19: Verzweigung
- 21: elektrische Verbindung
- 23: spannungsabhängiger Widerstand
- 24: Vorrichtung mit Meldeausgang M
- 25: Steuereinheit
- 26: Spannungsquelle
- 27: Zündfaden
- 101: Strang
- 103: PV-Modul
- 104: erste Zuführungsleitung
- 104': zweite Zuführungsleitung
- 104": Verbindungsleitung
- 105: Eingangsklemme Wechselrichter
- 105': Eingangsklemme Wechselrichter
- 107: Wechselrichter
- 111: Kurzschlussschalter
- 113: Sicherung
- 123: Überspannungsableiter
- 127: Treibsatz
- 129: Isolator
- U_{strang}: Strangspannung
- U_{St}: Steuersignal
- I_{St}: Auslösestrom
- S: Ansteuersignal
- M: Meldeausgang
- U_{Grenz}: Grenzwert
- A: Abstand

## Patentansprüche

1. Photovoltaikanlage mit einem Photovoltaikgenerator (1) aus mehreren, in Reihe geschalteten Photovoltaikmodulen (3), die über eine elektrische Verbindungsleitung (4) an einen Wechselrichter (7) angeschlossen sind, **dadurch gekennzeichnet, dass** zwischen dem Wechselrichter (7) und dem Photovoltaikgenerator eine mittels eines Steuersignals (U_{St}) steuerbare Sicherung (13) geschaltet ist, die bei Anliegen des Steuersignals die Sicherung (13) auslöst und **dadurch** die elektrische Verbindungsleitung (4) zwischen dem Photovoltaikgenerator (1) und dem Wechselrichter (7) unterbricht.

2. Photovoltaikanlage nach Anspruch 1, **dadurch gekennzeichnet, dass** die steuerbare Sicherung (23) eine sich selbst zerstörende Sicherung ist.

3. Photovoltaikanlage nach Anspruch 2, **dadurch gekennzeichnet, dass** die steuerbare Sicherung (23) eine pyrotechnische Sicherung ist.

4. Photovoltaikanlage nach einem der Ansprüche 1 bis 3, **dadurch gekennzeichnet, dass** das Steuersignal (U_{St}) über einen spannungsabhängigen Widerstand (23) erzeugt wird, der zwischen einem Signaleingang (15) der Sicherung (13) für das Steuersignal (U_{St}) und der Zuführungsleitung (4) des Photovoltaikgenerators (1) zum Wechselrichter (7) geschaltet ist.

5. Photovoltaikanlage nach Anspruch 4, **dadurch gekennzeichnet, dass** der spannungsabhängige Widerstand (23) ein Überspannungsableiter ist. (Figur 1)

6. Photovoltaikanlage nach Anspruch 5, **dadurch gekennzeichnet, dass** der Überspannungsableiter (23) einen Signalausgang (M) aufweist, der bei Ansprechen des Überspannungsableiters ein Signal (S) abgibt, welches einer Steuereinheit (25) zugeführt wird, die mit Hilfe des Signals das Steuersignal (U_{St}) erzeugt. (Figur 2)

7. Photovoltaikanlage nach Anspruch 5 oder 6, **dadurch gekennzeichnet, dass** der Überspannungsableiter (23) auf Zinkoxyd - Basis aufgebaut ist.

8. Photovoltaikanlage nach einem der Ansprüche 6 oder 7, **dadurch gekennzeichnet, dass** das Steuersignal (U_{St}) ein Gleichspannungssignal ist, welches einen Gleichstrom zwischen 2 Ampere und 5 Ampere für einen Zeitraum von mindestens 10 ms bereitstellt.

9. Photovoltaikanlage mit mehreren, in Reihe geschalteten Photovoltaikmodulen (103) als Photovoltaikgenerator (101), die an einen Wechselrichter (107) angeschlossen sind, **dadurch gekennzeichnet, dass** zwischen dem Wechselrichter (107) und dem Photovoltaikgenerator eine mittels eines Plasma zündenden Treibsatzes auslösende Sicherung (113) geschaltet ist, die bei Vorliegen des Plasmas auslöst und **dadurch** die elektrische Verbindungsleitung (104) zwischen dem Photovoltaikgenerator (101) und dem Wechselrichter (107) unterbricht. (Figur 3)

10. Photovoltaikanlage nach Anspruch 9, **dadurch gekennzeichnet, dass** der Treibsatz (127) an eine ein erstes Potential führende erste Zuführungsleitung (104) zwischen dem Wechselrichter (107) und dem Photovoltaikgenerator (101) gelegt ist und eine elektrische Verbindungsleitung (104"), die ein zweites Potential führende, zweite Zuführungsleitung (104') in einem definierten Abstand (A) zur ersten Zuführungsleitung (104) im Treibsatz (127) mündet, wobei das Plasma bei Überschreiten einer vorgegebenen Potentialdifferenz zwischen den Zuführungsleitungen (104,104') erzeugt wird.

11. Photovoltaikanlage nach Anspruch 10, **dadurch gekennzeichnet, dass** der definierte Abstand (A) unterdimensioniert ist, derart, dass die den Treibsatz zündende Potentialdifferenz lediglich ein Zehntel bis sieben Zehntel der maximal zulässigen Potentialdifferenz zwischen den beiden Zuführungs-leitungen (104,104') beträgt und dass ein Überspannungsableiter (123) zwischen der zweiten Zuführungsleitung (104') und der Mündung im Treibsatz vorgesehen ist.
